# EUROPEAN PATENT APPLICATION

(11) **EP 4 797 431 A1**
(43) Date of publication of application: **26.08.2026**
(21) Application number: 25851802.6
(22) Date of filing: 14.07.2025
(51) Int. Cl.: H01M 50/591, H01M 50/588, H01M 50/296, H01M 50/503, H01M 50/211

(54) **BATTERY PACK AND DEVICE INCLUDING SAME**

(30) Priority: 05.08.2024 KR 20240103823
(71) Applicant: LG Energy Solution, Ltd., Seoul 07335 (KR)
(72) Inventor: LEE, Wonjin, Daejeon 34122 (KR)
(74) Representative: Plasseraud IP
(86) International application number: PCT/KR2025/010305
(87) International publication number: WO 2026/034833

(57) **Abstract**

An embodiment of the present disclosure provides a battery pack including a plurality of battery modules, a pack frame configured to accommodate the battery modules, a plurality of inter-busbars configured to electrically connect terminals of neighboring battery modules among the battery modules, and a heat-resistant cover positioned across the battery modules and configured to cover the inter-busbars.

## Description

### [Technical Field]

### Cross-reference to related application(s)

This application claims priority to and the benefit of Korean Patent Application No. 10-2024-0103823 filed in the Korean Intellectual Property Office on August 05, 2024, the entire contents of which are incorporated herein by reference.

The present disclosure relates to a battery pack and a device including the same, and more particularly, to a battery pack and a device including the same capable of effectively blocking thermal runaway while reducing weight and cost.

### [Background Art]

In modern society, as portable devices such as mobile phones, laptops, camcorders, and digital cameras are used in daily life, development of techniques related to mobile devices as described above is becoming active. In addition, a rechargeable battery capable of charging and discharging is a measure to solve air pollution such as from conventional gasoline vehicles using fossil fuels, and is used as a power source for electric vehicles (EVs), hybrid electric vehicles (HEVs), and plug-in hybrid electric vehicles (P-HEV), and thus a need for development of rechargeable batteries is increasing.

Currently commercially available rechargeable battery include a nickel cadmium battery, a nickel hydrogen batteries, a nickel zinc battery, and a lithium rechargeable battery, and among them, the lithium rechargeable battery has little memory effect compared to nickel-based rechargeable batteries, so it is in the spotlight as it is freely charged and discharged, has a very low self-discharge rate, and has high energy density.

Such a lithium rechargeable battery mainly uses a lithium-based oxide and a carbon material as a positive electrode active material and a negative electrode active material, respectively. The lithium rechargeable battery includes an electrode assembly in which a positive electrode plate and a negative electrode plate to which a positive electrode active material and a negative electrode active material are respectively applied with a separator therebetween, and a battery case for sealing and housing the electrode assembly together with an electrolyte.

In general, a lithium rechargeable battery may be classified into a can-type rechargeable battery in which an electrode assembly is embedded in a metal can, and a pouch-type rechargeable battery in which an electrode assembly is embedded in a pouch of an aluminum laminate sheet depending on a shape of an exterior material.

In the case of rechargeable batteries used for small devices, 2 to 3 battery cells are positioned, but in the case of rechargeable batteries used for mid- to large-sized devices such as vehicles, a battery module in which a plurality of battery cells are electrically connected is used. In such a battery module, a plurality of battery cells are connected in series or parallel to each other to form a battery cell stack, thereby improving capacity and output. One or more battery modules are able to be mounted together with various control and protection systems such as a battery management system (BMS), a battery disconnect unit (BDU), and a cooling system to form a battery pack.

A battery pack includes battery modules as its subcomponents, and each battery module, in turn, contains multiple battery cells. Such a battery module may be formed of a case that accommodates a plurality of battery cells, or the battery cell assembly itself, which is formed by stacking battery cells, may be directly applied to a battery pack as a battery module. In addition, a number of battery cells included in a battery module or a number of battery modules included in a battery pack may be determined in various ways depending on an output or capacity of the battery pack required for an electric vehicle.

However, for these battery packs, one of the most important issues is safety. In particular, when a thermal event occurs in one of the multiple battery cells included in a battery pack, it is necessary to prevent the thermal event from propagating to other battery cells and modules. To this end, a partition wall or the like may be provided between the battery modules or battery cell stacks to block heat transfer between the battery modules or battery cells. In conventional designs, metallic materials have been used as partition walls to ensure structural rigidity, but this approach increases both the weight and cost of the battery pack. In addition, when using a metal partition wall, an additional structure must be used to improve heat resistance and insulation between battery modules and bus bars, which increases weight and cost and complicates the structure of the battery pack.

### [Disclosure]

### [Technical Problem]

The present disclosure attempts to provide a battery pack and a device including the same, capable of effectively reducing weight and cost by improving a partition wall structure between battery modules in a battery pack, while effectively preventing flame propagating between adjacent modules and improving space utilization efficiency with a simple structure.

The technical objects of the present invention are not limited to the objects mentioned above, and other technical objects not mentioned can be clearly understood by those skilled in the art from the description of the claims.

### [Technical Solution]

An embodiment of the present disclosure provides a battery pack including a plurality of battery modules, a pack frame configured to accommodate the plurality of battery modules, a plurality of inter-busbars configured to electrically connect terminals of neighboring battery modules among the plurality of battery modules, and a heat-resistant cover positioned across the plurality of battery modules and configured to cover the inter-busbars.

The heat-resistant cover may include heat-resistant plastic.

The plurality of battery modules may be placed in row and column directions, and the battery modules placed in the row direction are placed such that the terminals included in each of the plurality of battery modules face each other, and the heat-resistant cover may be placed to extend in the column direction across the terminals.

The heat-resistant cover may include a pair of side surface portions covering one surface of the plurality of battery modules, a bottom portion connecting lower portions of the pair of side surface portions, and a wing portion extending from an upper portion of each of the pair of side surface portions to partially cover an upper portion of the battery modules.

Each of the plurality of battery modules and the heat-resistant cover may be fixed to each other through snap-fit at the wing portion.

The wing portion may include a plurality of snap holes forming the snap-fit,

The battery pack may further include a plurality of snap pins inserted into the plurality of snap holes.

A plurality of connector holes may be formed on each of the pair of side surface portions to expose the connector terminals of each of the battery modules, and the plurality of connector holes may be positioned not to face each other on the pair of side surface portions.

The battery pack may further include a long busbar placed in a space between the pair of side surface portions.

The battery pack may further include an upper cover that covers a space between the pair of side surface portions of the heat-resistant cover.

The upper cover may include a plurality of coupling holes, and the heat-resistant cover may include a plurality of coupling hooks that are coupled with the plurality of coupling holes at corner portions where the side surface portions and the wing portion meet.

The battery pack may further include a plurality of junction boxes positioned on upper portions of some of the plurality of battery modules, and the long busbar may electrically connect the junction boxes and the plurality of battery modules, or the junction boxes, to each other.

The heat-resistant cover may further include a plurality of ring portions positioned adjacent to the respective connector holes.

A device according to another embodiment of the present disclosure may include the battery pack.

### [Advantageous Effects]

A battery pack and a device including the same according to an embodiment of the present disclosure may reduce a weight and cost of the battery pack by improving a partition wall structure positioned between battery modules in the battery pack, and may also effectively prevent flame propagating between adjacent modules while efficiently utilizing a space within the battery pack.

The effects of the present invention are not limited to the effects mentioned above, and other effects not mentioned can be clearly understood by those skilled in the art from the description of the claims.

### [Description of the Drawings]

FIG. 1 illustrates a perspective view showing a battery pack according to an embodiment of the present disclosure.
FIG. 2 illustrates an exploded perspective view of a battery pack according to an embodiment of the present disclosure.
FIG. 3 illustrates a heat-resistant cover of FIG. 1 in a separated state.
FIG. 4 illustrates a perspective view showing an enlarged portion A of FIG. 1.
FIG. 5 illustrates an enlarged portion "A" of FIG. 1.
FIG. 6 illustrates a top view showing the portion A of FIG. 1.
FIG. 7 illustrates a battery pack according to another embodiment of the present disclosure.
FIG. 8 illustrates a state in which an upper cover is removed from FIG. 7.
FIG. 9 illustrates an enlarged portion "B" of FIG. 7.
FIG. 10 illustrates an exploded view showing a heat-resistant cover and upper cover of FIG. 7 in a disassembled state.

### [Mode for Invention]

Embodiments described below are provided as examples to help understand the disclosure, and it should be understood that the present disclosure is able to be implemented in various ways other than the embodiments described herein. However, in the description of the present disclosure, detailed explanations and illustrations of well-known functions or components may be omitted if they are deemed to obscure the gist of the disclosure unnecessarily. In addition, to facilitate understanding of the disclosure, the attached drawings are not drawn to actual scale and the dimensions of some components may be exaggerated.

The first and second terms used in this application may be used to describe various components, but the components should not be limited by the terms. Terms are only used to differentiate one component from other components.

In addition, the terminology used in the present application is intended solely to describe specific embodiments, and is not meant to limit the scope of the claims. Singular forms are to include plural forms unless the context clearly indicates otherwise. As used herein, the terms "comprise," "formed of," or "include" are intended to specify the presence of stated features, numbers, operations (or steps), actions, components, parts, or combinations thereof, but are not intended to preclude the possibility of the presence or addition of one or more other features, numbers, operations, actions, components, parts, or combinations thereof.

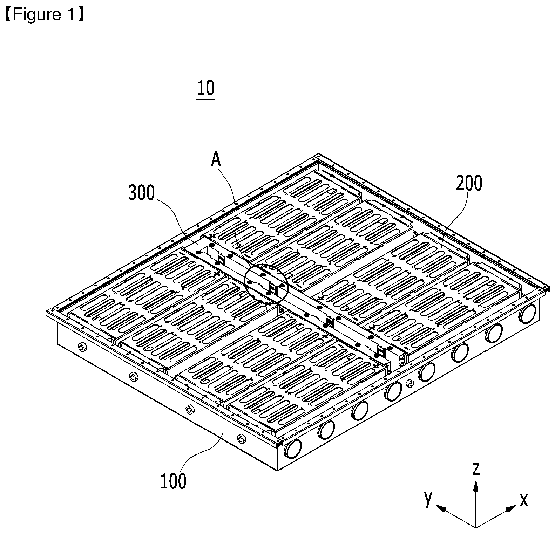

Hereinafter, a configuration of a battery pack according to an embodiment of the present disclosure will be described with reference to FIGS. 1 through 6.

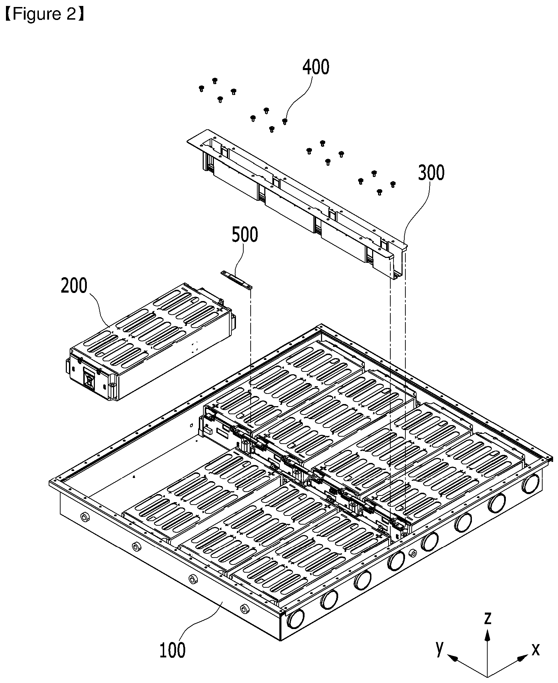

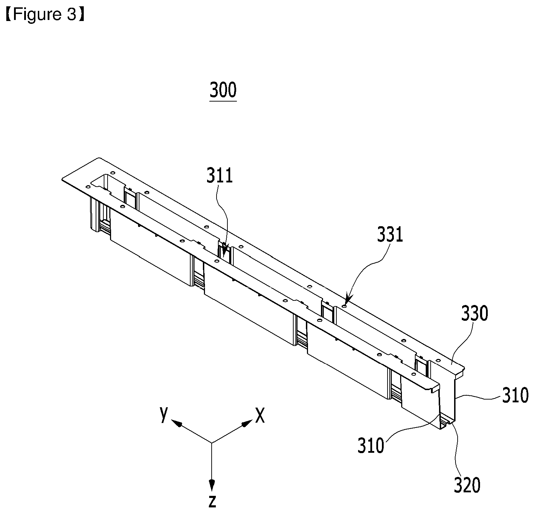

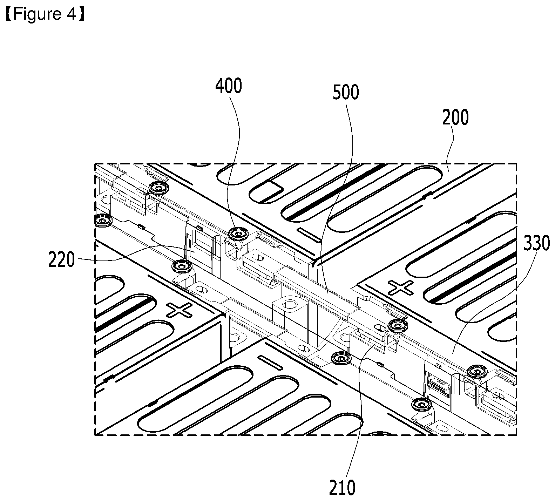

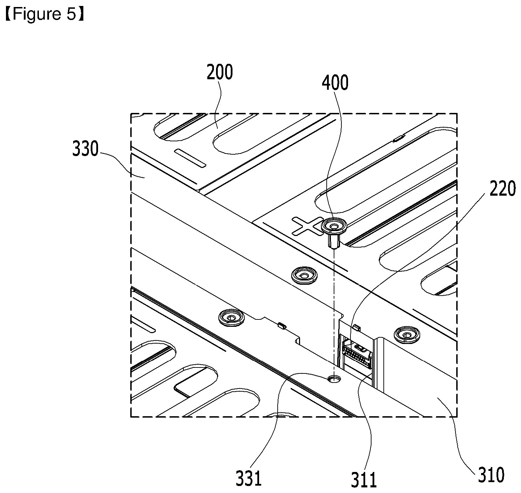

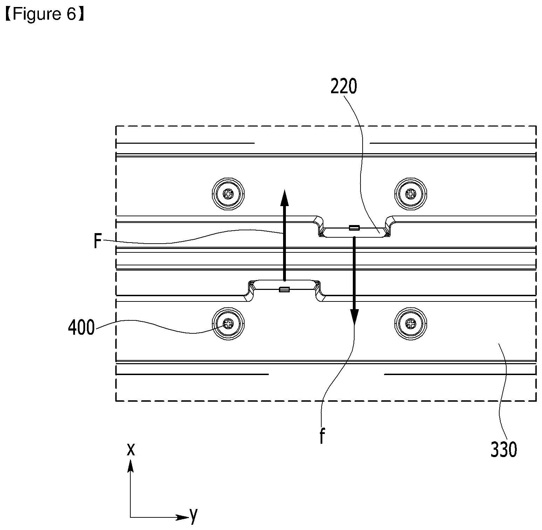

FIG. 1 illustrates a perspective view showing a battery pack according to an embodiment of the present disclosure. FIG. 2 illustrates an exploded perspective view of a battery pack according to an embodiment of the present disclosure. FIG. 3 illustrates a heat-resistant cover of FIG. 1 in a separated state. FIG. 4 illustrates a perspective view showing an enlarged portion A of FIG. 1. FIG. 5 illustrates an enlarged portion "A" of FIG. 1. FIG. 6 illustrates a top view showing the portion A of FIG. 1.

Referring to FIGS. 1 and 2, a battery pack 10 according to an embodiment of the present disclosure may include a plurality of battery modules 200; a pack frame 100 configured to accommodate the plurality of battery modules 200; a plurality of inter-busbars 500 configured to electrically connect adjacent battery modules 200 among the battery modules 200; and a heat-resistant cover 300 disposed across the battery modules 200 and formed to cover the inter-busbars 500.

The pack frame 100 may accommodate the battery modules 200. The pack frame 100 may include a plurality of module regions corresponding to a size of the battery module 200, and a plurality of battery modules 200 may be positioned in each of the module regions. According to the present embodiment, the battery modules 200 may be arranged in two rows along a stacking direction of the battery cells, but the present disclosure is not limited thereto, and may be arranged in an appropriate number as needed. Particularly, in the case of battery modules 200 adjacent in a row direction (X-direction), longitudinal ends of the battery modules 200 may be arranged to face each other, and at the longitudinal ends, connection structures such as terminals 210 (as shown in FIG. 4) and connectors 220 (as shown in FIG. 4), which allow each battery module 200 to electrically connect with external components, may be positioned. In addition, in this embodiment, a pack frame 100 is exemplified as a simple plate shape, but the pack frame 100 may be a cooling plate with a cooling path positioned inside, or may be a venting plate with a venting path positioned inside. Additionally, it may be a structure in which the cooling path and the venting path are arranged together, and various structures may be applied as a battery pack.

Each of the battery modules 200 may include a battery cell stack (not shown) formed by stacking a plurality of battery cells. The battery cell may serve as a rechargeable battery, and may be configured as a pouch-type rechargeable battery, but the present disclosure is not particularly limited thereto. Such battery cells may be configured as a plurality of units, and may be stacked with each other so as to be electrically connected, thereby forming a stacked battery cell assembly. Each of these multiple battery cells may include an electrode assembly, a battery case, and an electrode lead protruding from the electrode assembly. A battery cell stack may be accommodated in a module frame or the like with an electrode lead protruding, and a busbar frame and an end plate may be combined with the protruding electrode lead. However, this configuration is merely an example and the present disclosure is not limited thereto, and a module-less type battery pack may be directly constructed by combining a stacked battery cell assembly with a busbar frame without including a module frame during formation of the battery pack, and the configuration is not particularly limited.

Referring to FIGS. 4 and 5, each of the battery modules 200 may include a terminal 210 and a connector 220 for electrically connecting to an external configuration. The terminal 210 and the connector 220 may be exposed to an outside of the battery module 200 without being covered by the end plate. The terminal 210 may be electrically connected to an adjacent battery module 200 by an inter-busbar 500 when the battery module 200 constitute the battery pack 10.

The inter-busbar 500 may be formed in a shape extending in a y-axis direction as shown in FIG. 4, and may be coupled to the terminal 210 of the battery module 200 at opposite ends. As a result, it may be placed between adjacent battery modules 200 in the y-axis direction in the drawings, thereby allowing electrical connection therebetween. In addition, as described later, the inter-busbar 500 may be covered by the heat-resistant cover 300, so it may be protected from flames even if the flames occur.

The heat-resistant cover 300 may be formed across battery modules 200 that are adjacent to each other in the row direction, i.e., the x-axis direction. That is, as shown in FIGS. 1 and 2, the heat-resistant cover 300 may be formed to extend in the y-axis direction. The heat-resistant cover 300 may be formed along a space between the battery modules 200 to block between opposing battery modules 200. The heat-resistant cover 300 may be formed of heat-resistant plastic such as heat-resistant silicone. In this way, when a thermal runaway occurs in one of the battery modules 200, it may be possible to prevent flames or fire from spreading to the battery module 200 on the other side. Particularly, in an embodiment of the present disclosure, by removing heavy partition structures made of metallic materials and applying the heat-resistant cover 300 formed of heat-resistant plastic, it may be possible to reduce an overall weight of the battery pack 10 and also lower a cost thereof. In addition, when applying a partition wall structure made of a metal or a similar material, the configuration may present issues due to the lack of insulation, an additional insulating structure may be required to ensure separation from adjacent components, and extra insulating parts may have to be incorporated to secure space for connecting elements such as busbars, and as a result, an overall structure may become more complex and a manufacturing cost may increase. However, in the present disclosure, by utilizing the heat-resistant cover 300 made of a heat-resistant plastic material, the structure may function as a flame-resistant partition wall and provide an insulated space, which allows for a reduction in a number of components while optimizing spatial efficiency. In addition, the inter-busbar 500 may be coupled to the battery module 200 before the heat-resistant cover 300 is coupled, so the heat-resistant cover 300 may be mounted to cover the inter-busbar 500. This may allow for protection of inter-busbar 500 from flames, etc.

Referring to FIG. 3, a shape of the heat-resistant cover 300 may be formed along the space between the battery modules 200. That is, a pair of side surface portions 310 facing each surface of the battery module 200 may be formed, and may include a bottom portion 320 connecting lower ends of the pair of side surface portions 310. A U-shaped space may be formed when the pair of side surface portions 310 and the bottom portion 320 are connected, as viewed from the side. As illustrated in the drawings, the U-shaped space is extended along the y-axis direction, thereby allowing various busbars for electrical connections to be placed therein, as will be described below.

On the upper portion of each of the pair of side surface portions 310, a wing portion 330 extending toward the battery module 200 may be formed. The wing portion 330 may cover the battery module 200 and be coupled to an upper portion of the battery module 200. For this purpose, as shown in FIGS. 3 and 5, a plurality of snap holes 331 may be formed in the wing portion 330. The snap holes 331 may be communicated with a hole (not shown) formed on the upper portion of the battery module 200, and for example, the hole may be formed on an upper portion of an end plate of the battery module 200, to be communicated with the snap holes 331. A snap pin 400 may be inserted into the snap holes 331 to form a snap-fit. Thus, the heat-resistant cover 300 may be fixed to the battery module 200 in a simple manner without bolt coupling or the like.

A plurality of connector holes 311 may be formed at the side surface portion 310 of the heat-resistant cover 300. Connectors connected to each battery module 200 may be inserted through the connector holes 311. In this case, as shown in FIGS. 5 and 6, the connector holes 311 may be positioned on the pair of opposing side surface portions 310 such that they are offset from each other rather than facing each other. Through this disposition, even if a thermal runaway occurs in one of the opposing battery modules 200 and flames or the like are discharged through the connector holes 311, it may be possible to prevent the flames or the like from being introduced into the connector holes 311 of the opposing battery module 200, as indicated by an arrow F in FIG. 6.

In this way, according to an embodiment of the present disclosure, by employing the heat-resistant cover having thermal resistance at a partition wall position instead of using a conventional heavy partition wall structure, it may be possible to reduce a weight and cost of the battery pack, simplify an assembly process, and effectively protect battery module components such as the inter-busbar from flames or the like.

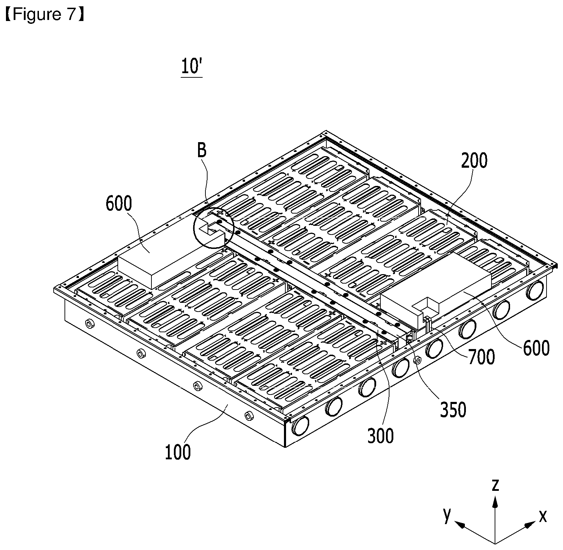

Next, a configuration of a battery pack according to another embodiment of the present disclosure will be described with reference to FIG. 7 to FIG. 10.

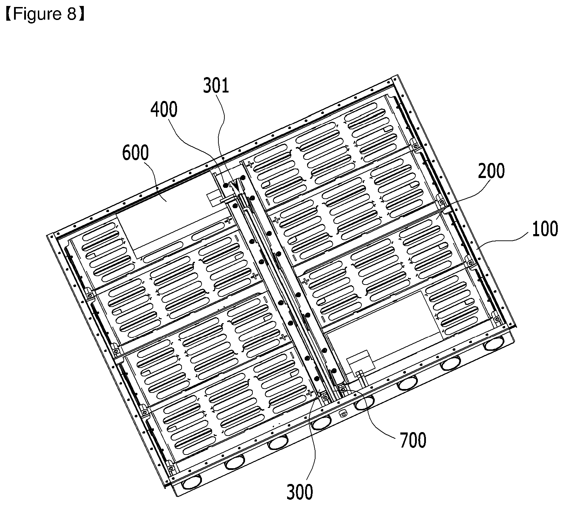

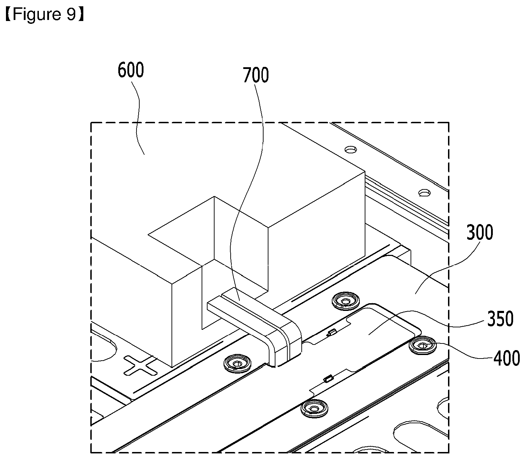

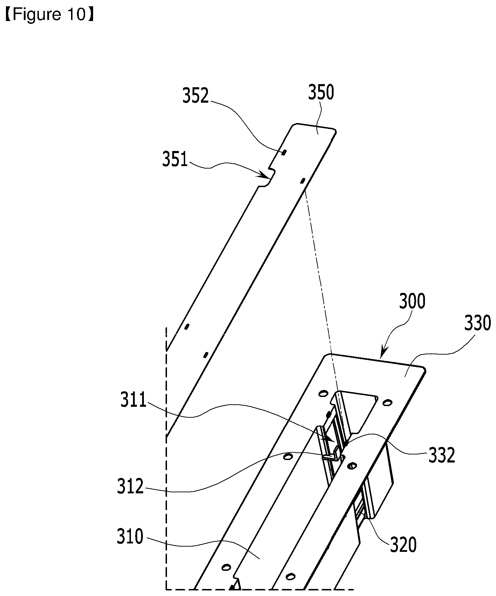

FIG. 7 illustrates a battery pack according to another embodiment of the present disclosure. FIG. 8 illustrates a state in which an upper cover is removed from FIG. 7. FIG. 9 illustrates an enlarged portion "B" of FIG. 7. FIG. 10 illustrates an exploded view showing a heat-resistant cover and upper cover of FIG. 7 in a disassembled state.

As illustrated in FIG. 7 and 8, the battery pack according to another embodiment of the present disclosure may further include a plurality of junction boxes 600 positioned at upper portions of some of the battery modules 200, a long busbar 700 configured to electrically connect them, and an upper cover 350 that covers the long busbar 700.

The junction boxes 600 may be responsible for electrical connection and protection of a battery pack 10'. Main functions may include collectively managing electrical connections between the battery cells and external devices, protecting against overcurrent and overcharging, monitoring a temperature, interfacing with a battery management system (BMS), providing connectors and connection features, regulating and stabilizing a voltage, and offering environmental protection. Through this, the junction boxes 600 may maintain safety and efficiency within the battery pack 10', may prevent damage to equipment, and may support stable electric power supply. The junction box 600 may include various components and electrical connections within the battery pack 10', and particularly, as illustrated in FIGS. 7 and 8, when long-distance electrical connections are required within the battery pack 10', it may be connected to a long busbar 700.

In another embodiment of the present disclosure, the long busbar 700 may be placed within a connection space 301 formed by the heat-resistant cover 300, as shown in FIG. 8. That is, the long busbar 700 may be connected to cross a space formed by the pair of side surface portions 310 and the bottom portion 320 of the heat-resistant cover 300. Accordingly, by employing a configuration of the heat-resistant cover 300 as a partition wall structure without additionally providing a separate insulating structure, a space for forming the long busbar 700 may be secured, thereby enhancing spatial efficiency and reducing a manufacturing cost.

Additionally, the upper cover 350 may be formed on the upper portion of the heat-resistant cover 300, i.e., on the upper portion of the connection space 301 between the pair of side surface portions 310 of the heat-resistant cover 300. The upper cover 350 may be formed of a heat-resistant material. In the upper cover 350, as shown in FIG. 10, an insertion hole 351 into which the long busbar 700 is inserted and a plurality of coupling holes 352 for coupling with the heat-resistant cover 300 may be formed. A plurality of coupling hooks 332 for coupling with coupling holes 352 are formed on an upper portion of the heat-resistant cover 300, specifically, on a corner portion where the side surface portion 310 and the wing portion 330 meet. The upper cover 350 may be fixed to the heat-resistant cover 300 by the coupling of the coupling hooks 332 and the coupling holes 352. In addition, the upper cover 350 is fastened with a simple coupling structure, so the upper cover 350 may be easily removed when an internal configuration needs to be changed as needed. In addition, by enabling easy attachment and detachment through such an assembly method, not only may assemblability be improved, but protection of the long busbar 700 may also be achieved at a low cost.

Particularly, by providing the upper cover 350, when a flame occurs, high-temperature particles, etc. may be prevented from falling onto the long busbar 700 and causing damage. Particularly, during thermal runaway, a high-temperature gas may tend to flow toward a region with lower resistance, due to a structural configuration, a central portion of the battery pack 10' where the heat-resistant cover 300 may be positioned has a relatively large space, resulting in lower resistance, which may increase likelihood of inflow of high-temperature conductive particles. However, in the present embodiment, the upper cover 350 may cover a corresponding portion, thereby preventing damage caused by high-temperature particles.

Additionally, referring to FIG. 10, the heat-resistant cover 300 may further include a plurality of ring portions 312 positioned adjacent to the connector holes 311. This ring portions 312 may have a shape that protrudes from an inside of the heat-resistant cover 300 toward the opposite side surface portion 310 and is bent upward at an end portion. The ring portions 312 may support a wire that is connected and extended from the battery module 200, and may be drawn out through the connector holes 311. Through this configuration, even when multiple wires are drawn out, they may be reliably supported and organized, thereby preventing wire damage and short-circuiting.

In this way, according to another embodiment of the present disclosure, when connecting the long busbar across the battery pack, an insulating space may be secured in a simple structure by utilizing a space formed by the heat-resistant cover, without requiring a separate insulating member, and as a result, improved safety and reduced manufacturing cost may be achieved. Additionally, by further including an upper cover covering the space through which a long busbar passes, the long busbar may be prevented from being damaged by high-temperature particles when a thermal event occurs.

Meanwhile, the battery pack according to the present embodiment may be configured as a packaged structure further including a battery management system (BMS) for managing temperature and voltage of the battery pack, and a cooling device.

The battery pack may be applied to various devices. Such a device may be applied to various means of transportation, including electric bicycles, electric vehicles, and hybrid vehicles, but the present disclosure is not limited thereto, and may be applicable to various devices utilizing battery modules, which also fall within the scope of the present disclosure.

While the embodiments of the present disclosure have been illustrated and described above, the present disclosure is not limited to the specific embodiments described herein, and various modifications and alterations may be made by those skilled in the art without departing from the scope of the disclosure as defined by the claims, and furthermore, such modifications should not be construed as being separately understood from the technical spirit or scope of the present disclosure.

### [Description of Symbols]

10, 10' battery pack
100 pack frame
200 battery module
300 heat-resistant cover
310 side surface portion
320 bottom portion
330 wing portion
350 upper cover
400 snap pins
500 inter-busbar
600 junction box
700 long busbar

## Claims

1. A battery pack comprising:
a plurality of battery modules;
a pack frame configured to accommodate the plurality of battery modules;
a plurality of inter-busbars configured to electrically connect terminals of neighboring battery modules among the plurality of battery modules; and
a heat-resistant cover positioned across the plurality of battery modules and configured to cover the inter-busbars.

2. The battery pack of claim 1, wherein
the heat-resistant cover includes heat-resistant plastic.

3. The battery pack of claim 1, wherein
the plurality of battery modules are placed in row and column directions, and the battery modules placed in the row direction are placed such that the terminals included in each of the plurality of battery modules face each other, and
the heat-resistant cover is placed to extend in the column direction across the terminals.

4. The battery pack of claim 3, wherein
the heat-resistant cover includes a pair of side surface portions covering one surface of the plurality of battery modules, a bottom portion connecting lower portions of the pair of side surface portions, and a wing portion extending from an upper portion of each of the pair of side surface portions to partially cover an upper portion of the battery modules.

5. The battery pack of claim 4, wherein
each of the plurality of battery modules and the heat-resistant cover are fixed to each other through snap-fit at the wing portion.

6. The battery pack of claim 5, wherein
the wing portion includes a plurality of snap holes forming the snap-fit, and
it further includes a plurality of snap pins inserted into the plurality of snap holes.

7. The battery pack of claim 4, wherein
a plurality of connector holes are formed on each of the pair of side surface portions to expose the connector terminals of each of the battery modules, and
the plurality of connector holes are positioned not to face each other on the pair of side surface portions.

8. The battery pack of claim 4, further comprising
a long busbar placed in a space between the pair of side surface portions.

9. The battery pack of claim 8, further comprising
an upper cover that covers a space between the pair of side surface portions of the heat-resistant cover.

10. The battery pack of claim 9, wherein
the upper cover includes a plurality of coupling holes, and
the heat-resistant cover includes a plurality of coupling hooks that are coupled with the plurality of coupling holes at corner portions where the side surface portions and the wing portion meet.

11. The battery pack of claim 8, further comprising
a plurality of junction boxes positioned on upper portions of some of the plurality of battery modules,
wherein the long busbar electrically connects the junction boxes and the plurality of battery modules, or the junction boxes, to each other.

12. The battery pack of claim 7, wherein
the heat-resistant cover further includes a plurality of ring portions positioned adjacent to the respective connector holes.

13. A device comprising at least one battery pack according to claim 1.
